# FASCICULE DE BREVET EUROPEEN

(11) **EP 1 085 383 B1**
(45) Date de publication et mention de la délivrance du brevet: **21.01.2009**
(21) Numéro de dépôt: 99118465.6
(22) Date de dépôt: 17.09.1999
(51) Int. Cl.: G04B 5/08, G04C 10/00, F16F 1/10

(54) **Dispositif antichoc pour générateur de puissance à masse oscillante**
Stossfeste Vorrichtung für einen durch eine Schwungmasse angetriebenen Generator
Anti-shock device for a power generator driven by an oscillating weight

(43) Date de publication de la demande: 21.03.2001
(73) Titulaire: ETA SA Manufacture Horlogère Suisse, 2540 Grenchen (CH)
(72) Inventeur: Kaelin, Laurent, 2615 Sonvilier (CH); Rebeaud, Jean-Philippe, 2088 Cressier (CH)
(74) Mandataire: Rossand, Isabelle

(56) Documents cités:
- EP-A- 0 791 867
- EP-A- 0 918 265

## Description

La présente invention est relative à un dispositif antichoc pour un générateur de puissance à masse oscillante, destiné à protéger de toute détérioration les organes mobiles du dispositif, notamment en cas de chocs pouvant provoquer un balancement excessif de ladite masse oscillante en risquant de provoquer une détérioration irréversible des organes et des mobiles de la chaîne cinématique en prise avec un accumulateur d'énergie mécanique, tel qu'un barillet, ou avec le rotor d'une génératrice électrique.

L'invention concerne en particulier un tel dispositif pour un générateur de puissance de petites dimensions à masse oscillante, dont les organes mobiles sont naturellement plus fragiles, ledit générateur servant à actionner un instrument de petit volume porté par un usager dont les mouvements provoqueront le balancement de la masse oscillante. Il s'agit par exemple, mais non limitativement d'une montre bracelet dont le mouvement électronique et/ou un circuit électronique d'émission et/ou réception de signaux électromagnétiques, est alimenté directement ou indirectement par le courant produit par une micro génératrice électrique entraînée par la masse oscillante.

Depuis longtemps on cherche à résoudre les problèmes de résistance mécanique posés par le générateurs d'énergie à masse oscillante en cas de mauvais usage, choc ou chute accidentelle de l'appareil, et un certain nombre de solutions a déjà été proposé.

Pour les montres à remontage automatique mécanique le document CH 281 490, publié en 1952, décrit une pièce d'horlogerie comprenant une masse oscillante de remontage supportée par un bras élastique mince en zigzag, destiné à amortir les choc axiaux que peut subir la masse. Ce bras est solidaire d'un pignon engrenant avec un secteur denté qui coopère avec le rochet du barillet, l'ensemble étant complété par deux ressort amortisseurs qui limitent l'amplitude des oscillations de la masse.

Selon un document encore antérieur, CH 254 577 publié en 1948, l'amortissement de la masse oscillante est obtenu au moyen d'un ressort spiral à lame verticale montée entre la masse oscillante et une pièce solidaire des pivots. Selon un mode de réalisation ce ressort spiral entoure l'axe de pivotement de la masse oscillante et selon un autre mode de réalisation un ou plusieurs de ces ressorts sont disposés au-dessus de la masse oscillante en étant excentrés par rapport audit axe de pivotement pour constituer une liaison élastique entre une cloche solidaire de l'axe et la masse oscillante elle-même. Dans cette construction on observera que les extrémités sont solidement ancrées à leurs points d'attaches respectifs au moyen de chevilles et qu'un dépassement des limites d'amortissement pourra provoquer une déformation du ressort sans toutefois l'arracher de ses points d'ancrage.

Dans un document plus récent EP 0 791 867, il est proposé un dispositif dans lequel, selon un des modes de réalisation, l'amortissement est obtenu au moyen d'un mobile intermédiaire formé par une roue dentée supportant un ressort spiral plat ayant au plus trois spires, dont les extrémités sont solidement ancrées, d'une part dans ladite roue, en prise avec le pignon du rotor de la génératrice, et d'autre part dans un arbre libre en rotation dans ladite roue, ledit arbre comprenant un pignon en prise avec les dents d'une couronne supportant la masse oscillante. En fonctionnement normal il est prévu que la lame spirale ait une rigidité suffisante pour ne subir pratiquement aucune déformation. Lors d'un entraînement de la masse oscillante un peu supérieur à la normale, par exemple à l'occasion d'un mouvement brusque pour une montre portée au poignet, il est certain que le ressort spiral plat peut se déformer suffisamment pour éviter des dommages aux engrenages.

Pour une sollicitation de la masse oscillante plus importante, par exemple lors d'une chute de l'instrument de petit volume, il est vraisemblable que les fixations du ressort spiral plat résisteront. Par contre, il existe un risque tout aussi certain pour que le ressort spiral plat subisse un flambage créant une déformation irréversible, nuisible au fonctionnement de l'ensemble.

Pour pallier les insuffisances ou inconvénients qui existent encore dans les dispositifs les plus pertinents de l'art antérieur précité pour éviter les dommages crées par une masse oscillante fonctionnant dans des conditions extrêmes, la présente invention a pour objet un dispositif antichoc dont l'agencement d'un ressort spiral enroulé dans un micro barillet permet à la fois d'éviter l'arrachement d'un point d'ancrage du ressort ou sa déformation irréversible lorsque la masse oscillante est sollicitée dans des conditions extrêmes, et de procurer une petite réserve d'inertie favorable au rendement global du dispositif dans de tels conditions.

A cet effet l'invention a pour objet un dispositif antichoc pour une génératrice actionnée par les mouvements alternatifs d'une masse oscillante transmis à la génératrice par l'intermédiaire d'un barillet, ladite génératrice comprenant un rotor pourvu d'un pignon, ladite masse oscillante comprenant un balourd solidaire d'un axe et supporté par une couronne dentée, et ledit barillet comprenant un tambour, ayant une base prolongée radialement par une couronne pour former une roue dentée, libre en rotation autour d'un arbre pivoté, et à l'intérieur duquel est enroulé un ressort spiral couplé par une extrémité à l'axe de la masse oscillante et fixé par l'autre extrémité à la paroi interne du tambour pour former un moyen d'entraînement du rotor, ledit ressort spiral ayant une constante d'élasticité telle qu'en fonctionnement normal les spires s'enroulent ou se déroulent à partir d'une position neutre dans laquelle elles sont régulièrement espacées et occupent en cas de choc une position ouverte dans laquelle les spires sont plaquées contre l'intérieur du tambour ou une position fermée dans laquelle les spires sont regroupées au centre, caractérisé en ce qu'une lame glissante est également couplée à l'arbre entraîné par la masse oscillante et enroulée dans le même sens que le ressort spiral pour envelopper ce dernier sans liaison mécanique rigide sur une longueur correspondant sensiblement à une spire en position ouverte.

Le dispositif antichoc selon l'invention peut être formé d'une seule entité mécanique comprenant à la fois le barillet et la masse oscillante. Dans ce mode de réalisation, le balourd de la masse oscillante est monté libre à rotation par rapport à la couronne dentée. Le barillet et la masse oscillante ont le même axe de révolution, de sorte que l'arbre du barillet et l'axe de la masse oscillante sont confondus en une seule pièce. De même, la roue dentée du barillet et la couronne dentée de la masse oscillante sont confondues en une seule pièce pour former une seule et unique denture en prise directe avec le pignon du rotor.

Selon un autre mode de réalisation préféré, le dispositif antichoc selon l'invention est réalisé sous la forme d'un mobile intermédiaire interposé entre la génératrice et la masse oscillante. Ce mobile intermédiaire comprend un barillet, tel que défini précédemment, dont la roue dentée engrène avec le pignon du rotor et dont l'arbre est prolongé par un pignon qui engrène avec la couronne dentée de la masse oscillante dont le balourd est rendu solidaire de ladite couronne, par exemple en venant de matière avec elle, en étant soudée ou en étant montée en force. Ce mode de réalisation, qui sera pris par la suite comme exemple illustratif, présente l'avantage, par rapport au précédent, de réduire la hauteur globale du dispositif et d'augmenter la vitesse de rotor grâce à un engrenage multiplicateur.

Ce dispositif dans lequel une énergie mécanique alternative est transformée en un courant continu comporte évidemment de façon connue un système mécanique d'inversion telle qu'une roue cliquet, permettant l'entraînement du rotor toujours dans le même sens, ou un circuit électronique d'inversion des polarités.

L'invention sera mieux comprise par la description ci-après d'un mode de réalisation en référence aux dessins annexés dans lesquels :
- la figure 1 est une vue de dessus d'une génératrice incorporant le dispositif antichoc selon l'invention lorsque la masse oscillante occupe une position extrême;
- la figure 2 est une vue en perspective correspondant à la figure 1, mais limitée à la chaîne cinématique lorsque la masse oscillante est en position neutre;
- les figures 3A, 3B, 3C sont des vues de dessus du dispositif antichoc dans trois positions;
- la figure 4 est une représentation d'une déformation qui pourrait être observée en absence de dispositif antichoc selon l'invention; et
- la figure 5 est une variante du moyen de liaison au centre du dispositif antichoc.

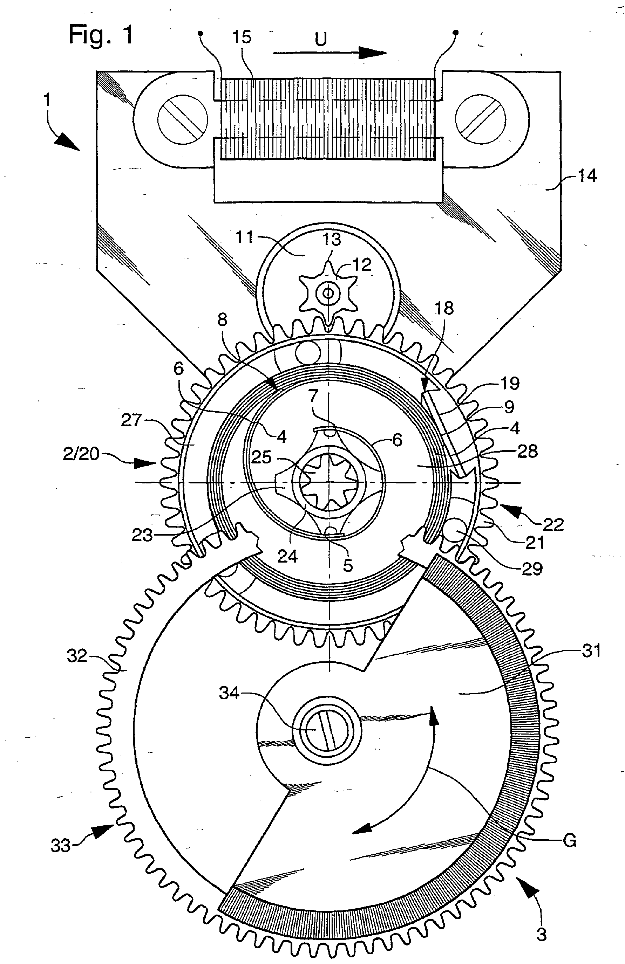

Pour une meilleure compréhension de l'invention, le mode de réalisation illustré par les figures 1 à 5 est celui dans lequel le dispositif antichoc est formé par un mobile intermédiaire et comprend un circuit électronique d'inversion des polarités non représenté.

A la figure 1 on a représenté schématiquement une génératrice 1 dont la source d'énergie est constituée par une masse oscillante 3 actionnée par gravité, le mouvement oscillatoire correspondant étant, illustré par la double flèche G. Le dispositif équipe un instrument de petit volume qui peut être, par exemple, une montre-bracelet. La masse oscillante 3 est sollicitée par les mouvements du bras qui porte la montre pour lui donner un mouvement de va et vient qui, dans les montres mécaniques remonte le barillet de la montre, c'est-à-dire enroule un ressort spiral destiné à restituer ultérieurement au mouvement horloger l'énergie mécanique ainsi accumulée. Comme décrit, par exemple dans le document FR 1 185 795, le barillet peut être équipé d'un dispositif de sécurité formé par une bride solidaire de l'extrémité de la spire extérieure du ressort pour sauter d'un appui de blocage à un autre en cas de sollicitation excessive, de façon à éviter une rupture du point d'ancrage au centre.

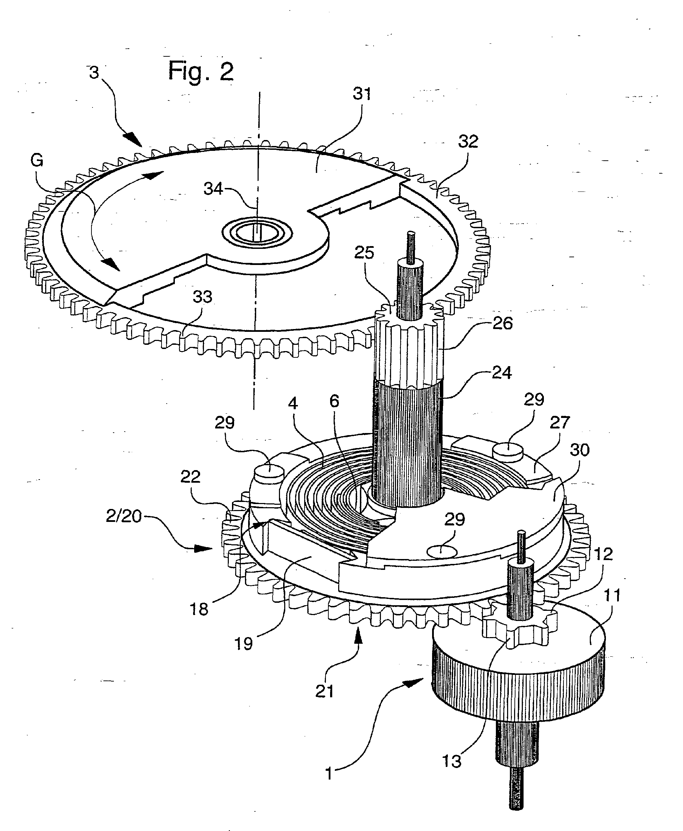

Dans le cas présent l'accumulation d'énergie mécanique ne constitue pas le but essentiel de l'invention pour laquelle l'extrémité de la spire extérieure doit avoir un point fixe d'ancrage sur la paroi interne du tambour. Comme on le voit en se référant aux figures 1 et 2, la masse oscillante 3 actionne indirectement une génératrice 1 alimentant en tension électrique U un accumulateur ou un condensateur de très grande capacité (non représenté). L'énergie stockée dans cet accumulateur ou ce condensateur alimente à son tour des circuits électroniques (quartz, diviseur, etc.) nécessaires au fonctionnement de la montre.

La génératrice 1 comprend un rotor 11 couplé au système mécanique par les dents 13 d'un pignon 12, un stator bipolaire 14 et un enroulement 15 entourant le stator 14, aux bornes duquel on recueille la tension U produite par la génératrice 1. Selon le mode de réalisation représenté un mobile intermédiaire 20 est interposé dans la chaîne cinématique entre le rotor 11 de la génératrice 1 et la masse oscillante 3.

La masse oscillante, représentée à la figure 1 dans une position extrême et à la figure 2 dans une position d'équilibre, comprend de façon connue en soit un balourd 31 ayant sensiblement la forme d'un demi-cercle pivoté en son centre sur un axe 34 et solidaire d'une couronne dentée 32 qui peut venir de matière avec le balourd 31 ou constituer une pièce séparée, par exemple soudée ou montée en force. Une partie de cette couronne dentée 32 n'est pas représentée de façon à faire apparaître plus clairement le dispositif antichoc selon l'invention logé dans le mobile intermédiaire 20.

Le mobile intermédiaire 20 comprend un barillet 2 formé par un tambour 27 fermé d'un côté par une base 28 qui s'étend radialement au-delà du tambour 27 pour former une roue dentée 21 dont les dents 22 engrènent avec les dents 13 du pignon 12 du rotor. Ce mobile intermédiaire 20 est ultérieurement fermé par un couvercle 30 représenté partiellement arraché à la figure 2 pour montrer le coeur du dispositif antichoc. Ce couvercle 30 est positionné et fixé au moyen des goupilles 29 solidaires du tambour 27. Le tambour comprend en son centre un arbre 24 sur lequel est bloquée une virole 23 à quatre branches. Cet arbre 24 a l'une de ses extrémités, du côté de la virole 23, montée libre à rotation dans la base 28 et son autre extrémité est prolongée par un pignon 25 dont les dents 26 engrènent avec les dents 33 de la couronne dentée 32 de la masse oscillante. Comme on le voit plus clairement sur la figure 2, il n'existe alors encore aucune liaison cinématique entre la génératrice 1 et la masse oscillante 3. Pour établir cette liaison cinématique et en garantir la bonne tenue en cas de choc, le barillet comprend un ressort spiral 4 et une lame glissante 6 dont l'agencement est expliqué ci-après.

Le ressort spiral 4, formé de 4 à 10 spires, a son extrémité au centre solidaire d'une branche de la virole 23 en un point 5. Cette liaison est effectuée de façon connue, par soudage laser ou par collage. L'extrémité extérieure du ressort spiral 4 est solidaire en un point 9, visible en particulier sur la figure 2, de la paroi interne du tambour 27. Dans l'exemple représenté, cette liaison est effectuée par soudure de l'extrémité du ressort dans la partie sensiblement médiane d'une plaque métallique 19 qu'on engage dans les rainures 18 d'un logement prévu dans le tambour 27.

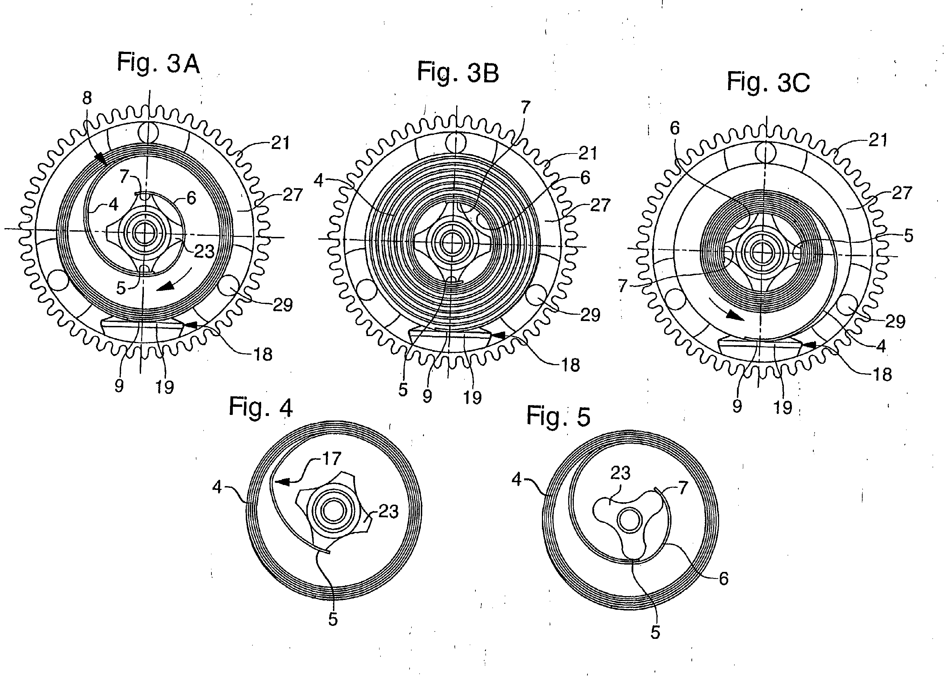

Le ressort spiral est formé par une lame dont la section et le matériau qui la compose sont tels qu'en fonctionnement normal, partant de la position neutre, représentée aux figures 2 et 3B, dans laquelle les spires sont régulièrement espacées, les spires commencent à s'enrouler ou à se dérouler, puis entrainent le barillet 2 pour transmettre le mouvement à la génératrice 1. Dans le cas où ce dispositif équipe une montre-bracelet le couple doit sensiblement être compris entre 5 µN.m.rad⁻¹ et 500 µN.m.rad⁻¹. A titre d'exemple on peut utiliser un ressort en acier ayant une section droite de 0,04 x 0,5 mm.

En se reportant plus particulièrement aux figures 1 et 3A, on a représenté une position extrême en cas de choc dans laquelle les spires du ressort spiral 4 sont plaquées contre la paroi du tambour 27 lorsque l'arbre 24 est entraîné dans le sens horaire (indiqué par une flèche sur la figure 3A). En absence de toute protection, et dans le cas où la masse oscillante exerce encore une force sur l'arbre 24, le point d'attache 5 sur la virole 23 peut être arraché, ou la première spire peut subir un flambage, comme représenté par la flèche 17 sur la figure 4.

Pour éviter ces inconvénients on ajoute une lame glissante 6 qui enveloppe le ressort spiral 4 sur une longueur sensiblement égale à la première spire du ressort 4 en position ouverte (figure 3A), mais sans avoir aucune liaison mécanique avec celle-ci.

Cette lame glissante 6 peut avoir les mêmes caractéristiques d'élasticité que le ressort spiral 4, ou des caractéristiques supérieures en agissant soit sur sa section, soit sur le matériau qui la compose.

La lame 6 a l'une de ses extrémités ancrée sur une autre branche de la virole 23 en un point 7, situé en amont du point d'ancrage 5 du ressort spiral 4. Dans l'exemple représenté les deux points d'ancrage présentent un décalage angulaire de 180°, mais il est bien évident que tout autre décalage est possible, sans sortir du cadre de l'invention. A titre d'exemple on a représenté à la figure 5 un autre type de virole à trois branches qui procure un décalage angulaire de 120°. L'autre extrémité de la lame 6 est libre et vient, en position ouverte (figure 3A), se pincer en un point 8 entre la première et la deuxième spire du ressort spiral 4. Ce point 8 constitue un point d'appui provisoire qui permet de renforcer la première spire, c'est-à-dire d'éviter le flambage évoqué précédemment en cas d'une sollicitation excessive de la masse oscillante 3. Lorsque le dispositif repasse en position neutre (figure 3B) la lame 6 va glisser entre les spires du ressort spiral 4 pour occuper une position où elle n'exercera aucune fonction sur la marche normale de la masse oscillante. En se référant maintenant à la figure 3C, on voit que, si le choc produit un enroulement du ressort spiral dans le sens anti-horaire, les spires se regroupent au centre dans la position dite fermée et la lame glissante 6 n'exerce aucune fonction, la solidité du mécanisme dépendant seulement de la fixation au point 9 par la plaque 19 liée au tambour 27.

On observera en outre que le passage de la position ouverte (figure 3A), ou de la position fermée (figure 3C), à la position neutre (figure 3B) constitue une petite réserve d'énergie favorable au rendement énergétique global de l'ensemble du dispositif.

Le dispositif qui vient d'être décrit, avec un mobile intermédiaire, présente les avantages de réduire la hauteur de l'ensemble du dispositif et d'augmenter, par le jeu des engrenages pouvant avoir un facteur multiplicatif de l'ordre de 50, la vitesse de rotation du rotor et en conséquence d'avoir un effet favorable sur le bilan énergétique global.

Si les exigences du point de vue énergétique sont moins grandes, le barillet 2 et la masse oscillante 3 peuvent former une seule unité mécanique. En pareil cas le balourd 31 est alors libre en rotation par rapport à la couronne dentée 32, l'axe 34 de la masse oscillante 3 est confondu avec l'arbre 24 du barillet 2 qui ne comporte alors plus de pignon 25 et le tambour 27 est solidaire de la couronne dentée 32 qui assure les mêmes fonctions que la roue dentée 21 qui peut alors être supprimée. Exprimée d'une autre façon la couronne dentée 32 et la roue dentée 21 sont alors confondues.

Il est encore possible pour l'homme de l'art de faire des modifications sans sortir du cadre de l'invention tel que défini dans les revendications, pour adapter le dispositif antichoc à tout type de montre-bracelet, ou à d'autres produits non horlogers, tel qu'un téléphone portable pour augmenter son autonomie de fonctionnement.

## Revendications

1. Dispositif antichoc pour une génératrice (1) actionnée par les mouvements alternatifs d'une masse oscillante (3) transmis à la génératrice par l'intermédiaire d'un barillet (2), ladite génératrice (1) comprenant un rotor (11) pourvu d'un pignon (12), ladite masse oscillante (3) comprenant un balourd (31) solidaire d'un axe (34) et supporté par une couronne dentée (32), et ledit barillet (2) comprenant un tambour (27), ayant une base (28) prolongée radialement par une couronne pour former une roue dentée (21), libre en rotation autour d'un arbre pivoté (24) et à l'intérieur duquel est enroulé un ressort spiral (4) couplé par une extrémité à l'axe (34) de la masse oscillante (3) et fixé par l'autre extrémité à la paroi interne du tambour (27) pour former un moyen d'entraînement du rotor (11), ledit ressort spiral (4) ayant une constante d'élasticité telle qu'en fonctionnement normal les spires s'enroulent ou se déroulent à partir d'une position neutre dans laquelle elle sont régulièrement espacées et occupent en cas de choc une position ouverte dans laquelle les spires sont plaquées contre l'intérieur du tambour (27) ou une position fermée dans laquelle les spires sont regroupées au centre, **caractérisé en ce qu'**une lame glissante (6) est également couplée à l'arbre (24) entraîné par la masse oscillante (3), enroulée dans le même sens que le ressort spiral (4) et enveloppant ce dernier sans liaison mécanique rigide sur une longueur correspondant sensiblement à une spire en position ouverte.

2. Dispositif antichoc pour génératrice selon la revendication 1, **caractérisé en ce que** le barillet (2) et la masse oscillante (3), dont le balourd (31) est monté libre à rotation par rapport à la couronne dentée (32), constituent une seule entité mécanique en ayant, d'une part leur arbre (24) et leur axe (34) respectifs confondus, d'autre part leur roue dentée (21) et leur couronne dentée (32) respectives confondues pour engrener directement avec le pignon (12) du rotor (11).

3. Dispositif antichoc pour génératrice selon la revendication 1, **caractérisé en ce que** le barillet (2) forme un mobile intermédiaire (20) indépendant dont la roue dentée (21) engrène avec le pignon (12) du rotor (11) et dont l'arbre (24) est prolongé par un pignon (25) pour engrener avec la couronne dentée (32) rendue solidaire du balourd (31) de la masse oscillante (3).

4. Dispositif antichoc pour génératrice selon la revendication 1, **caractérisé en ce que** les fixations-du ressort spiral (4) et de la lame glissante (6) au centre sont effectuée par l'intermédiaire d'une virole (23) chassée sur l'arbre (24) du barillet (2) en permettant d'écarter les points de fixation respectifs (5, 7) d'un angle compris entre 30° et 180°.

5. Dispositif antichoc pour génératrice selon la revendication 2, **caractérisé en ce que** le barillet (2) est obturé par un couvercle (30) maintenu par des goupilles (29) solidaires du tambour (27).

6. Montre-bracelet comportant un dispositif antichoc pour génératrice selon une quelconque des revendications 1 à 5, pour alimenter un mouvement électronique et/ou une unité électronique associée à des moyens de réception et/ou émissions de signaux électromagnétiques.

7. Dispositif antichoc pour génératrice selon la revendication 6, **caractérisé en ce que** la position neutre est obtenue en choisissant un ressort spiral (4) ayant une constante d'élasticité comprise entre 5 µN.m.rad⁻¹ et 500 µN.m.rad⁻¹.

8. Dispositif antichoc par génératrice selon la revendication 1 **caractérisé en ce que** la lame glissante (6) a une constante d'élasticité supérieure à celle du ressort spiral (4) en ayant une section plus importante ou en ayant la même section mais en étant réalisé dans un matériau ayant lui même une constante d'élasticité supérieure.

## Claims

1. Shockproof device for a generator (1) activated by the alternating movements of an oscillating weight (3) transmitted to the generator via a barrel (2), said generator (1) including a rotor (11) provided with a pinion (12), said oscillating weight (3) including an unbalance (31) secured to a arbour (34) and supported by a toothed wheel (32), and said barrel (2) including a drum (27), having a base (28) extended radially by a ring to form a toothed wheel (21), which rotates freely about a pivoted arbour (24) and inside which is wound a spiral spring (4) coupled by one end to the arbour (34) of the oscillating weight (3) and secured by the other end to the inner wall of the drum (27) to form driving means for the rotor (11), said spiral spring (4) having an elastic constant, such that during normal operation, the turns are wound or unwound from a neutral position in which they are regularly spaced and occupy, in the event of a shock, an open position in which the turns are pressed against the inside of the drum (27) or a closed position in which the turns are regrouped at the centre, **characterised in that** a sliding strip (6) is also coupled to the arbour (24) driven by the oscillating weight (3) wound in the same direction as the spiral spring (4) and surrounding the latter without any rigid mechanical connection over a length substantially corresponding to a turn in an open position.

2. Shockproof device for a generator according to claim 1, **characterised in that** the barrel (2) and the oscillating weight (3), whose unbalance (31) is mounted so as to rotate freely with respect to the toothed ring (32), constitute a single mechanical entity having, on the one hand their respective arbour (24) and arbour (34) merged, on the other hand their respective toothed wheel (21) and toothed ring (32) merged to mesh directly with the pinion (12) of the rotor (11).

3. Shockproof device for a generator according to claim 1, **characterised in that** the barrel (2) forms an independent intermediate wheel and pinion (20) whose toothed wheel (21) meshes with the pinion (12) of the rotor (11) and whose arbour (24) is extended by a pinion (25) to mesh with the toothed ring (32) which is secured to the unbalance (31) of the oscillating weight (3).

4. Shockproof device for a generator according to claim 1, **characterised in that** the fastening of the spiral spring (4) and the sliding strip (6) to the centre are effected via a collet (23) driven onto the arbour (24) of the barrel (2) allowing the respective points of attachment (5, 7) to be separated by an angle comprised between 30° and 180°.

5. Shockproof device for a generator according to claim 2, **characterised in that** the barrel (2) is closed by a cover (30) held by pins (29) secured to the drum (27).

6. Wristwatch including a shockproof device for a generator according to any of claims 1 to 5, for powering an electronic movement and/or an electronic unit associated with means for receiving and/or transmitting electromagnetic signals.

7. Shockproof device for a generator according to claim 6, **characterised in that** the neutral position is obtained by selecting a spiral spring (4) having an elastic constant comprised between 5µN.m.rad⁻¹ and 500 µN.m.rad⁻¹

8. Shockproof device for a generator according to claim 1, **characterised in that** the sliding strip (6) has a greater elastic constant than that of the spiral spring (4) having a larger section or the same section but being made in a material which itself has a higher elastic constant.

## Patentansprüche

1. Stoßsichere Vorrichtung für einen Generator (1), der durch die hin und her gehenden Bewegungen einer oszillierenden Masse (3), die an den Generator über ein Federgehäuse (2) übertragen wird, betrieben wird, wobei der Generator (1) einen mit einem Trieb (12) versehenen Rotor (11) umfasst, wobei die oszillierende Masse (3) eine mit einer Achse (34) fest verbundene Unwucht (31), die von einem Zahnkranz (32) getragen wird, aufweist und wobei das Federgehäuse (2) eine Trommel (27) umfasst, die eine Basis (28) besitzt, die radial durch einen Kranz verlängert ist, um ein Zahnrad (21) zu bilden, das um eine Schwenkwelle (24) frei drehbar ist, und in der eine Spiralfeder (4) gewickelt ist, die an einem Ende mit der Achse (34) der oszillierenden Masse (3) gekoppelt ist und am anderen Ende an der Innenwand der Trommel (27) befestigt ist, um ein Antriebsmittel für den Rotor (11) zu bilden, wobei die Spiralfeder (4) eine Elastizitätskonstante besitzt, derart, dass im Normalbetrieb die Windungen sich ausgehend von einer Neutralstellung, in der sie regelmäßig beabstandet sind, aufoder abwickeln, und im Fall eines Stoßes eines offene Stellung einnehmen, in der die Windungen gegen die Innenwand der Trommel (27) gedrängt werden, oder eine geschlossene Stellung einnehmen, in der die Windungen in der Mitte angeordnet sind, **dadurch gekennzeichnet, dass** mit der durch die oszillierende Masse (3) angetriebenen Welle (24) außerdem ein gleitender dünner Streifen (6) gekoppelt ist, der in derselben Richtung wie die Spiralfeder (4) gewickelt ist und diese Letztere ohne starre mechanische Verbindung über eine Länge, die im Wesentlichen einer Windung in der offenen Stellung entspricht, umgreift.

2. Stoßsichere Vorrichtung für einen Generator nach Anspruch 1, **dadurch gekennzeichnet, dass** das Federgehäuse (2) und die oszillierende Masse (3), deren Unwucht (31) frei drehbar in Bezug auf den Zahnkranz (32) montiert ist, eine einzige mechanische Einheit bilden, wobei einerseits ihre Welle (24) und ihre Achse (34) zusammenfallen und andererseits ihr Zahnrad (21) und ihr Zahnkranz (32) zusammenfallen, um direkt mit dem Trieb (12) des Rotors (11) in Eingriff zu gelangen.

3. Stoßsichere Vorrichtung für einen Generator nach Anspruch 1, **dadurch gekennzeichnet, dass** das Federgehäuse (2) ein bewegliches unabhängiges Zwischenelement (20) bildet, dessen Zahnrad (21) mit dem Trieb (12) des Rotors (11) in Eingriff ist und dessen Welle (24) durch einen Trieb (25) verlängert ist, um mit dem Zahnkranz (32), der mit der Unwucht (31) der oszillierenden Masse (3) fest verbunden ist, in Eingriff zu gelangen.

4. Stoßsichere Vorrichtung für einen Generator nach Anspruch 1, **dadurch gekennzeichnet, dass** die Befestigungen der Spiralfeder (4) und des gleitenden dünnen Streifens (6) in der Mitte über eine Spiralrolle (23), die auf die Welle (24) des Federgehäuses (2) getrieben ist und ermöglicht, die jeweiligen Befestigungspunkte (5, 7) um einen Winkel im Bereich von 30° bis 180° beabstandet zu halten, bewerkstelligt sind.

5. Stoßsichere Vorrichtung für einen Generator nach Anspruch 2, **dadurch gekennzeichnet, dass** das Federgehäuse (2) durch einen Deckel (30) verschlossen ist, der durch mit der Trommel (27) fest verbundene Zapfen (29) gehalten wird.

6. Armbanduhr, die eine stoßsichere Vorrichtung für einen Generator nach einem der Ansprüche 1 bis 5 enthält, um ein elektronisches Uhrwerk und/oder eine elektronische Einheit, der Mittel zum Empfangen und/oder Senden von elektromagnetischen Signalen zugeordnet sind, zu versorgen.

7. Stoßsichere Vorrichtung für Generator nach Anspruch 6, **dadurch gekennzeichnet, dass** die Neutralstellung dadurch erhalten wird, dass eine Spiralfeder (4) mit einer Elastizitätskonstante im Bereich von 5 µN. m.rad⁻¹ und 500 µN. m.red⁻¹ gewählt wird.

8. Stoßsichere Vorrichtung für Generator nach Anspruch 1, **dadurch gekennzeichnet, dass** der gleitende dünne Streifen (6) eine Elastizitätskonstante besitzt, die größer als jene der Spiralfeder (4) ist, indem sie einen größeren Querschnitt besitzt oder indem sie den gleichen Querschnitt besitzt, jedoch aus einem Material hergestellt ist, das selbst eine höhere Elastizitätskonstante besitzt.
